# EUROPEAN PATENT APPLICATION

(11) **EP 3 495 967 A1**
(43) Date of publication of application: **12.06.2019**
(21) Application number: 18211804.2
(22) Date of filing: 11.12.2018
(51) Int. Cl.: G06F 16/957, G06F 16/56

(54) **SYSTEMS AND METHODS FOR DIGITAL CONTENT DELIVERY OVER A NETWORK**

(30) Priority: 11.12.2017 US 201715837815
(71) Applicant: Capital One Services, LLC, McLean, VA 22102 (US)
(72) Inventor: ANTONYAN, Tigran, New York, NY 10016 (US)
(74) Representative: Finnegan Europe LLP

(57) **Abstract**

Systems and methods for providing digital content over a network are disclosed. A system may include one or more memory devices storing instructions and one or more processors configured to execute the instructions to perform operations. The operations may include receiving a request for an image. The request may contain a specification for the image. The operations may also include retrieving data representing a source image in a scalable source image format. The operations may further include generating data representing a raster image based on the source image data and the specification; caching the raster image data; delivering the raster image data to the client device; and delivering the cached raster image data to the client device in response to a subsequent request for the raster image data, when the cached raster image data is available for the image as specified in the request.

## Description

### BACKGROUND

User interfaces in digital products (e.g., websites or mobile phone applications) often use images to enhance user experiences. Such images may include logos, icons, artworks, and the like. Data representing such images are typically stored as raster image files. Raster image files typically use dot matrix data structures to represent generally rectangular grids of pixels, or points of color, which may be rendered viewable via a monitor or other display devices.

When loading a user interface, a client device (e.g., a computer or a mobile phone) may send a request to a content provider (e.g., a web server) to request delivery of one or more raster image files used by the user interface. Upon receiving the request, the content provider may retrieve the raster image files and deliver the retrieved raster image files to the client device.

It is noted that the content provider may be configured to serve a number of different client devices. It is also noted that different client devices may have different requirements for the raster image files. For instance, a desktop computer that supports a relatively larger display may request delivery of a relatively larger raster image file compared to that requested by a mobile phone having a relatively smaller display. The content provider may therefore be required to maintain multiple raster image files representing various sizes of the same image (e.g., a logo or an icon). This may lead to problems associated with having to store too many raster image files. Version control and maintenance of these raster image files may also be very difficult for the content provider.

Alternatively, client devices may be configured to resize the raster image files according to their own requirements. It is noted, however, that resizing a raster image file may reduce the image quality whether the raster image is scaled up or down. It is also noted that delivering raster image files that are larger than required (e.g., delivering a raster image file optimized for a large display to a mobile phone) may waste network bandwidth. Therefore, it is desirable to provide improved network-based digital image content delivery systems and methods to address the aforementioned shortcomings.

### BRIEF SUMMARY

The disclosed embodiments include network-based content-sharing systems and methods.

According to an aspect of the present disclosure, there is provided a method for providing digital content over a network, the method comprising: receiving, from a client device via an Application Programming Interface (API) a request for an image, the request containing a specification for the image; retrieving, in response to the request, data representing a source image, the source image data being in a scalable source image format; generating data representing a raster image based on the source image data and the specification; caching the raster image data in the one or more memory devices; delivering the raster image data to the client device via the API; and delivering the cached raster image data to the client device in response to a subsequent request for the raster image data, when the cached raster image data is available for the image as specified in the request.

The method may further comprise: detecting a change to the source image data and/or a removal of the source image data; and purging the cached raster image data generated based on the source image data.

The method may further comprise: delivering, to the client device via the API, metadata associated with the raster image data.

The metadata may comprise a brand name associated with the raster image, a brand color associated with the raster image, an owner of the brand name, and/or a category of a business in which the owner participates.

The API may be configured to accept a request conforming to Hypertext Transfer Protocol (HTTP).

The specification may comprise an image size, an image file type, a color scheme, and/or a background setting.

The scalable source image format may be a vector image format.

According to an aspect of the present disclosure, there is provided a method for processing digital content over a network, the method comprising: transmitting, to a server via an Application Programming Interface (API) a request for an image, the request containing a specification for the image; receiving, from the server via the API, data representing a raster image, the raster image data being generated by the server in response to the request and based on data representing a source image in a scalable source image format; and displaying the raster image data on the client device via a Graphical User Interface (GUI).

The method may further comprise: receiving, from the server via the API, metadata associated with the raster image data.

The method may further comprise: adjusting the GUI based on the metadata.

The metadata may comprise a brand name associated with the raster image, a brand color associated with the raster image, an owner of the brand name, and/or a category of a business in which the owner participates.

The API may be configured to accept a request conforming to Hypertext Transfer Protocol (HTTP).

The specification may comprise an image size, an image file type, a color scheme, and/or a background setting.

The scalable source image format may be a vector image format.

According to an aspect of the present disclosure, there is provided a method for handling digital content over a network, the method comprising: communicating, from a first device to a second device via an Application Programming Interface (API) a request for an image, the request comprising a specification for the image; retrieving, in response to the request, data representing a source image, the source image data being in a scalable source image format; generating data representing a raster image, based on the source image data and the specification; and delivering the raster image data from the second device to the first device via the API.

The method may further comprise: caching the raster image data in one or more memory devices accessible to the second device; delivering the cached raster image data to the first device in response to a subsequent request for the raster image data when the cached raster image data is available for the image as specified in the request; detecting a change to the source image data and/or a removal of the source image data; and purging the cached raster image data generated based on the source image data based on results of the detecting.

The method may further comprise displaying the raster image data on the first device via a Graphical User Interface (GUI).

The method may further comprise: delivering, from the second device to the first device via the API, metadata associated with the raster image data.

The method may further comprise: adjusting the GUI based on the metadata.

The metadata may comprise a brand name associated with the raster image, a brand color associated with the raster image, an owner of the brand name, and/or a category of a business in which the owner participates.

The API may be configured to accept a request conforming to Hypertext Transfer Protocol (HTTP).

The specification may comprise an image size, an image file type, a color scheme, and/or a background setting.

The scalable source image format may be a vector image format.

According to an aspect of the present disclosure, there is provided a system for providing digital content over a network, the system comprising: one or more memory devices storing instructions; and one or more processors configured to execute the instructions to cause the system to perform any of the methods according any of the above-described aspects.

According to an aspect of the present disclosure, there is provided a computer-readable medium storing instructions which, when executed by a computer, cause the computer to perform any of the methods according to any of the above-described aspects.

According to an aspect of the present disclosure, there is provided a computer program comprising instructions which, when the program is executed by a computer, cause the computer to carry any of the methods according to any of the above-described aspects.

In one embodiment, a system for providing digital content over a network is disclosed. The system may include one or more memory devices storing instructions and one or more processors configured to execute the instructions to perform operations. The operations may include receiving, from a client device via an Application Programming Interface (API), a request for an image. The request may contain a specification for the image. The operations may also include retrieving, in response to the request, data representing a source image. The source image data may be in a scalable source image format. The operations may further include generating data representing a raster image based on the source image data and the specification; caching the raster image data in the one or more memory devices; delivering the raster image data to the client device via the API; and delivering the cached raster image data to the client device in response to a subsequent request for the raster image data, when the cached raster image data is available for the image as specified in the request.

In another embodiment, a system for processing digital content over a network is disclosed. The system may include one or more memory devices storing instructions and one or more processors configured to execute the instructions to perform operations. The operations may include transmitting, to a server via an API, a request for an image. The request may contain a specification for the image. The operations may also include receiving, from the server via the API, data representing a raster image. The raster image data may be generated by the server in response to the request and based on data representing a source image in a scalable source image format. The operations may further include displaying the raster image data on the client device via a Graphical User Interface (GUI).

In another embodiment, a method for handling digital content over a network is disclosed. The method may include: communicating, from a first device to a second device via an Application Programming Interface (API), a request for an image, the request comprising a specification for the image; retrieving, in response to the request, data representing a source image, the source image data being in a scalable source image format; generating data representing a raster image, based on the source image data and the specification; and delivering the raster image data from the second device to the first device via the API.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate exemplary disclosed embodiments and, together with the description, serve to explain the disclosed embodiments. In the drawings:
Fig. 1 is a schematic diagram illustrating an exemplary network-based digital content delivery system, consistent with disclosed embodiments.
Fig. 2 is an illustration of an exemplary user interface, consistent with disclosed embodiments.
Fig. 3 is an illustration of another exemplary user interface, consistent with disclosed embodiments.
Fig. 4 is a flow diagram of an exemplary digital content delivery method, consistent with disclosed embodiments.

### DETAILED DESCRIPTION

Reference will now be made to exemplary embodiments, examples of which are illustrated in the accompanying drawings and disclosed herein. Wherever convenient, the same reference numbers will be used throughout the drawings to refer to the same or like parts.

The disclosed embodiments are directed to systems and methods for providing digital content delivery over a network. In particular, a content provider (e.g., a web server) may have access to source image data stored in a scalable source image format. Client devices (e.g., computers or mobile phones) may send requests to the server to request delivery of particular images. Upon receiving a request from a client device, the server may retrieve an appropriate source image file and generate a raster image file. The server may then deliver the raster image file to the client device. In some embodiments, the server may require only one source image file for a given image (e.g., logo or icon). The server may therefore provide centralized control of the source image file, which may in turn reduce version control and maintenance problems associated with conventional file management systems. In some embodiments, the server may cache the raster image file generated so that the cached raster image file can be reused. In some embodiments, the server may also deliver metadata to the client device. In some embodiments, the client device may utilize the metadata to provide user interface customizations.

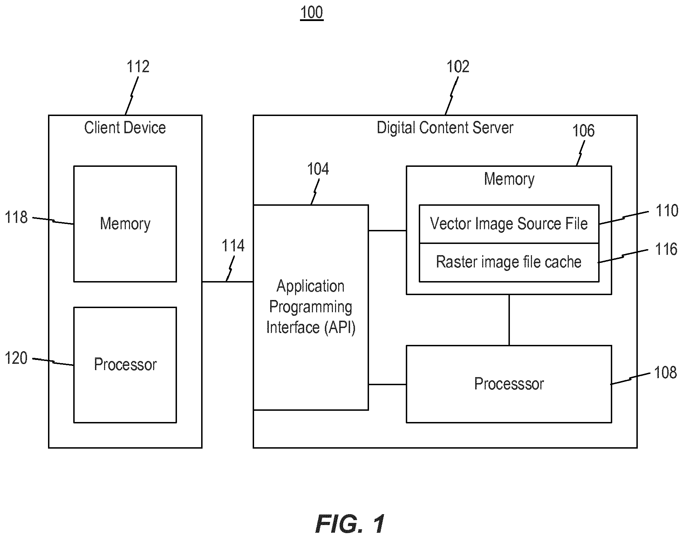

Fig. 1 is a schematic diagram illustrating an exemplary network-based digital content delivery system 100, consistent with disclosed embodiments. Referring to Fig. 1, system 100 may include a content provider (may also be referred to as a server) 102 and a client device 112. Server 102 and client device 112 may communicate with each other via a network 114. Network 114 may comprise any type of computer networking arrangement used to exchange data. For example, network 114 may be the Internet, a private data network, virtual private network using a public network, and/or other suitable connection(s) that enables server 102 and client device 112 to communicate with each other. Network 114 may also include a public switched telephone network ("PSTN") and/or a wireless network.

Client device 112 may include one or more dedicated processors, application-specific integrated circuits (ASICs), field-programmable gate arrays (FPGAs), or various other types of processing units 120 coupled with one or more non-transitory processor-readable memories 118 configured for storing processor-executable code. When the processor-executable code is executed by processor 120, processor 120 may carry out instructions to communicate with server 102 via an Application Programming Interface (API) 104. Client device 112 may, for example, send a request for an image to server 102 via API 104. In some embodiment, the request may contain a specification for the image. The specification may specify, for example, a file name, an image size, an image file type, a color scheme, a background setting, and/or the like.

Server 102 may include one or more dedicated processors, application-specific integrated circuits (ASICs), field-programmable gate arrays (FPGAs), or various other types of processing units 108 coupled with one or more non-transitory processor-readable memories 106 configured for storing processor-executable code. When the processor-executable code is executed by processor 108, processor 108 may carry out instructions in response to the request received via API 104.

For instance, processor 108 may retrieve data representing a source image from a source image data storage device in response to the request received. In some embodiments, a portion of memory 106 may serve as a source image data storage device 110. The request may specify the name of the source image (e.g., the file name), and processor 108 may use the file name to retrieve the source image file from source image data storage device 110. Alternatively, a storage device located outside of server 102 may serve as source image data storage device 110. For instance, in some embodiments, source image data storage device 110 may be located on client device 112 or on a third-party device. In such embodiments, the request may provide instructions for retrieving the source image file, and processor 108 may use the instructions specified in the request to retrieve the source image file via network 114. In some embodiments, the request may include a copy of the source image file, in which case processor 108 may retrieve the source image file by downloading a copy of the source image file via network 114.

The source image file retrieved by processor 108 may be stored in a scalable source image format. A source image format may be considered scalable if the source image can be scaled up or down to an arbitrary resolution without apparent loss of quality. A vector image format, and more specifically, a scalable vector graphics (SVG) format, is an exemplary scalable source image format. Specifically, scalable vector graphics may use shapes (e.g., polygons) to describe how to create an image.

Processor 108 may rasterize the image described by the source image file to generate a raster image file. In some embodiments, processor 108 may generate the raster image file based on the specification contained in the request received from client device 112. For example, if client device 112 specifies a particular image size, processor 108 may generate the raster image file according to the particular image size specified by client device 112. Processor 108 may then deliver the raster image file to client device 112 via API 104.

In some embodiments, processor 108 may store a copy of the raster image file into a raster image file cache 116 so that processor 108 can reuse the cached raster image file if the same raster image file is subsequently requested by the same or a different client device 112. In some embodiments, processor 108 may reuse a cached raster image file as long as the source image file used to generate the raster image file remains current (e.g., the source image file used to generate the raster image file has not been modified, updated, removed, outdated, or otherwise made unavailable or obsolete). In some embodiments, processor 108 may purge or invalidate the cached raster image file as soon as the source image file used to generate the raster image file is modified, updated, removed, outdated, or otherwise made unavailable. In this manner, processor 108 may be able to prevent stale images from being delivered to client devices 112 while avoiding the overhead associated with generating a raster image file for every request.

In some embodiments, raster image file cache 116 may be implemented as an integrated component of memory 106. Alternatively, raster image file cache 116 may be implemented as a separate data storage component accessible to processor 108 without departing from the scope of the present disclosure.

As will be appreciated from the above, system 100 configured in accordance with the present disclosure requires only one source image file for a given image (e.g., logo or icon), which can be used to generate multiple raster image files of various sizes to serve different client devices. It is noted that the ability to use only one source image file for a given image (e.g., logo or icon) may be desirable because it simplifies version control and maintenance of the source image files. For example, if a given image (e.g., a company logo) includes a trademark symbol (TM) that should be replaced by a registered trademark symbol (®), the provider of the logo may only need to update the source image file utilized by server 102. Server 102 may then promulgate the change to all client devices 112 that subsequently request the logo, eliminating the need for the provider of the logo to modify multiple raster image files of various sizes to serve different client devices 112.

It is to be understood that while image size is presented as an exemplary parameter that client device 112 may specify in its request, client device 112 may also specify other parameters in addition to (or instead of) the image size. For example, client device 112 may specify an image file type for the raster image file (e.g., (Joint Photographic Experts Group) JPEG, (Portable Network Graphics) PNG, or (Tagged Image File Format) TIFF). If processor 108 supports the image file type specified by client device 112, processor 108 may generate the raster image file according to the specified image file type. In another example, client device 112 may specify a background color for the raster image file (e.g., white, black, or transparent). If the source image file supports modification of background color, processor 108 may generate the raster image file with the specified background color accordingly.

In still another example, client device 112 may specify a color scheme for the raster image file (e.g., grayscale, inverse color, high contrast or the like). To the extent that processor 108 has the graphic processing abilities to handle the color scheme specified by client device 112, processor 108 may generate the raster image file according to the specified color scheme. The ability to adjust color schemes of the generated raster image files may be appreciated by various types of users, including those who are visually impaired. Moreover, client device 112 may specify, and processor 108 may take into consideration, other parameters in addition to the exemplary parameters described above without departing from the scope of the present disclosure.

In some embodiments, client device 112 may specify the parameters (e.g., file name, image size, image file type, color scheme, background setting, and/or the like) in a request that conforms to the Hypertext Transfer Protocol (HTTP) standard. For example, if client device 112 uses a Uniform Resource Locator (URL) to request an image file, client device 112 may simply append one or more parameters at the end of the URL to specify the image size, image file type, color scheme, background setting, and/or the like. A request constructed in this manner may be desirable because an API 104 capable of processing HTTP requests (e.g., GET requests) may be readily available to handle it. It is also to be understood, however, that the HTTP standard is presented merely as an example. Client device 112, server 102, and API 104 may be configured to communicate utilizing various types of known or yet to be developed communication standards without departing from the scope of the present disclosure.

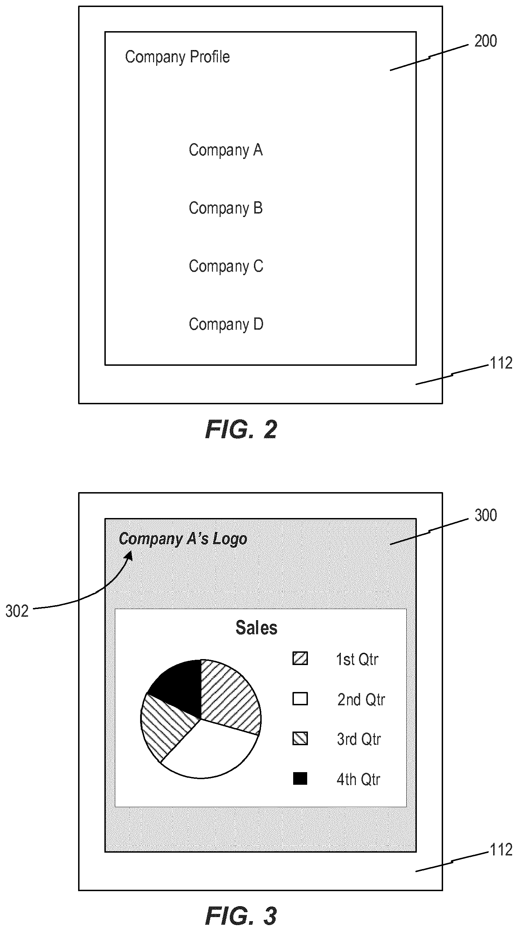

In some embodiments, server 102 may be configured to provide not only the requested raster image file, but also metadata associated with the raster image file to client device 112. The metadata may indicate, for example, a brand name associated with the raster image, a brand color associated with the raster image, an owner of the brand name, a category of a business in which the owner participates, an image size ratios, an image color contrast, and/or the like. In some embodiments, as depicted in Figs. 2 and 3, client device 112 may use the metadata received from server 102 to adjust its user interface 200.

For example, as shown in a simplified illustration depicted in Fig. 2, client device 112 may present a landing page 200 to a user. For illustrative purposes, landing page 200 may include links to the profiles of various Companies A-D. If the user chooses to open the profile of Company A, client device 112 may send a request to server 102 (depicted in Fig. 1) to request delivery of a raster image file representing Company A's logo. Server 102 may process the request as described above and deliver the raster image file representing Company A's logo to client device 112 as requested. Server 102 may also send metadata to client device 112. The metadata may indicate, for example, a brand name associated with the raster image and a brand color associated with the raster image.

Client device 112 may utilize the brand name or the brand color metadata in various ways when client device 112 presents Company A's profile page 300 to the user. For example, client device 112 may choose to display the brand name in a text format instead of Company A's logo 302 in profile page 300 (e.g., if the user chooses to use a text-based browser, or if Company A's logo 302 cannot be displayed for various reasons). In another example, client device 112 may choose to render profile page 300 at least partially based on the brand color metadata received (e.g., client device 112 may set the background color of profile page 300 based on the brand color metadata). In this manner, client device 112 may use the metadata provided by server 102 to dynamically customize user interface 300 presented on client device 112.

It is to be understood that while the examples depicted in Figs. 2 and 3 illustrate the utilization of brand name and brand color metadata, such an illustration is merely exemplary and is not meant to be limiting. It is contemplated that the metadata provided by server 102 may also include the owner of the brand name, the category of the business in which the owner participates, as well as other types of information not explicitly enumerated above.

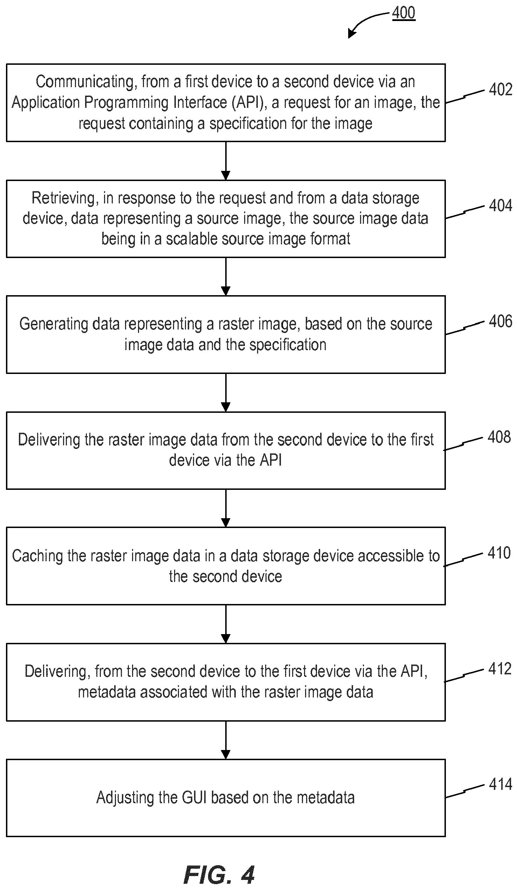

Referring now to Fig. 4, a flow diagram illustrating an exemplary method 400 for handling digital content over a network consistent with the disclosed embodiments is shown. While method 400 is described herein as a series of steps, it is to be understood that the order of the steps may vary in other implementations. In particular, steps may be performed in any order, or in parallel. It is to be understood that each step of method 400 may be performed by one or more processors, computers, servers, controllers, and/or the like.

In some embodiments, the method 400 may be performed by system 100 (as depicted in Fig. 1). At step 402, the method 400 may include communicating, from a first device (e.g., client device 112 in Fig. 1) to a second device (e.g., server 102 in Fig. 1) via an Application Programming Interface (API), a request for an image. The request may identify the image requested (e.g., by file name or file location) and may contain a specification for the image requested. In some embodiments, the specification for the image may specify, for example, an image size, an image file type, a color scheme, a background setting, and/or the like.

At step 404, method 400 may include retrieving, in response to the request, data representing a source image. Method 400 may retrieve the source image data from a data storage device accessible to the first device (e.g., client device 112 in Fig. 1) or from a data storage device accessible to the second device (e.g., server 102 in Fig. 1). Alternatively, method 400 may retrieve the source image data from a third-party location. The source image data may be stored in a scalable source image format. A source image format may be considered scalable if the source image can be scaled up or down to an arbitrary resolution without loss of apparent quality. A vector image format, and more specifically, a scalable vector graphics (SVG) format, may be considered an exemplary scalable source image format.

At step 406, the method 400 may include generating data representing a raster image. The method 400 may generate the raster image data based on the source image data and the specification for the image contained in the request received at step 402. For example, if the specification for the image specifies a particular image size, the method 400 may generate the raster image data according to the particular image size specified in the specification. It is contemplated that the specification for the image may specify other parameters in addition to image size without departing from the scope of the present disclosure. For example, the specification for the image may include parameters such as image file type, color scheme, background setting, and/or the like.

At step 408, the method 400 may include delivering the raster image data from the second device to the first device via the API. The first device may utilize the raster image data for display or other purposes (e.g., printing) upon receiving the raster image data from the second device.

In some embodiments, method 400 may include a caching step 410. Caching step 410 may cache the raster image data in a data storage device accessible to the second device (e.g., server 102 in Fig. 1). The second device may therefore reuse the cached raster image file if the same raster image file is subsequently requested. In some embodiments, the second device may reuse a cached raster image file as long as the source image data used to generate the raster image file remains current (e.g., the source image file used to generate the raster image file has not been modified, updated, removed, outdated, or otherwise made unavailable or obsolete). For instance, the second device may deliver a cached raster image file to a client device in response to a request for the raster image file if the cached raster image file is available for the image as specified in the request. In some embodiments, the second device may purge or invalidate the cached raster image file as soon as the source image data used to generate the raster image file is modified, updated, removed, outdated, or otherwise made unavailable. In this manner, the second device may be able to prevent stale images from being delivered to the first device while avoiding the overhead associated with generating a raster image file for every request.

In some embodiments, the method 400 may include a delivering step 412. The optional delivering step 412 may deliver, from the second device to the first device via the API, metadata associated with the raster image data. The metadata may indicate, for example, a brand name associated with the raster image, a brand color associated with the raster image, an owner of the brand name, a category of a business in which the owner participates, an image size ratio, an image color contrast, and/or the like. In some embodiments, the method 400 may include an adjusting step 414 for adjusting a user interface of the first device based on the metadata received from the second device.

In some embodiments, the first device may be a client device configured to present the raster image on an electronic display. Such client devices may include, but are not limited to, computers, tablets, mobile phones, as well as other types of electronic devices. In some embodiments, the first device may be a client device configured to present the raster image on a non-electronic display. Such client devices may include, but are not limited to, two-dimensional or three-dimensional printers. It is to be understood that the listing of client devices provided herein is merely exemplary and is not meant to be limiting. It is contemplated that other types of devices may be configured to perform the methods described above without departing from the scope of the present disclosure.

In some examples, some or all of the logic for the above-described techniques may be implemented as a computer program or application or as a plug-in module or subcomponent of another application. The described techniques may be varied and are not limited to the examples or descriptions provided.

Moreover, while illustrative embodiments have been described herein, the scope thereof includes any and all embodiments having equivalent elements, modifications, omissions, combinations (e.g., of aspects across various embodiments), adaptations and/or alterations as would be appreciated by those in the art based on the present disclosure. For example, the number and orientation of components shown in the exemplary systems may be modified. Further, with respect to the exemplary methods illustrated in the attached drawings, the order and sequence of steps may be modified, and steps may be added or deleted.

Thus, the foregoing description has been presented for purposes of illustration only. It is not exhaustive and is not limiting to the precise forms or embodiments disclosed. Modifications and adaptations will be apparent to those skilled in the art from consideration of the specification and practice of the disclosed embodiments. For example, while a financial service provider and merchant have been referred to herein for ease of discussion, it is to be understood that consistent with disclosed embodiments other entities may provide such services in conjunction with or separate from a financial service provider and merchant.

The claims are to be interpreted broadly based on the language employed in the claims and not limited to examples described in the present specification, which examples are to be construed as non-exclusive. Further, the steps of the disclosed methods may be modified in any manner, including by reordering steps and/or inserting or deleting steps.

Furthermore, although aspects of the disclosed embodiments are described as being associated with data stored in memory and other tangible computer-readable storage mediums, one skilled in the art will appreciate that these aspects may also be stored on and executed from many types of tangible computer-readable media, such as secondary storage devices, like hard disks, floppy disks, or CD-ROM, or other forms of RAM or ROM. Accordingly, the disclosed embodiments are not limited to the above described examples, but instead is defined by the appended claims in light of their full scope of equivalents.

Also described herein are the following numbered aspects:
1. A method for providing digital content over a network, the method comprising:
   receiving, from a client device via an Application Programming Interface (API) configured to accept requests conforming to Hypertext Transfer Protocol (HTTP), a request for an image, the request containing a specification for generating the image;
   retrieving, in response to the request, data representing a source image, the source image data being in a scalable source image format;
   generating data representing a raster image based on the source image data and the specification;
   caching the raster image data in the one or more memory devices;
   delivering the raster image data to the client device via the API;
   delivering the cached raster image data to the client device in response to a subsequent request for the raster image data, when the cached raster image data is available for the image as specified in the request;
   delivering, to the client device via the API, metadata associated with the raster image data, the metadata comprising a brand color associated with the raster image; and
   modifying a user interface configured to be displayed by the client device to render a profile page based on the brand color.
2. The method of aspect 1, further comprising:
   detecting at least one of a change to the source image data or a removal of the source image data; and
   purging the cached raster image data generated based on the source image data.
3. The method of aspect 1 or aspect 2, wherein the request is a GET request.
4. The method of any of aspects 1 to 3, wherein the specification comprises at least one of an image size, an image file type, a color scheme, or a background setting.
5. The method of any of aspects 1 to 4, wherein the scalable source image format is a vector image format.
6. The method of any of aspects 1 to 5, wherein the metadata further comprises at least one of a brand name associated with the raster image, an owner of the brand name, or a category of a business in which the owner participates.
7. A system for providing digital content over a network, the system comprising:
   one or more memory devices storing instructions; and
   one or more processors configured to execute the instructions to perform the method of any of aspects 1 to 6.
8. A computer-readable medium storing instructions which, when executed by a computer, cause the computer to perform the method of any of aspects 1 to 7.
9. A computer program comprising instructions which, when the program is executed by a computer, cause the computer to carry out the method of any of aspects 1 to 6.
10. A method for processing digital content over a network, the method comprising:
   transmitting, to a server via an Application Programming Interface (API) configured to accept requests conforming to Hypertext Transfer Protocol (HTTP), a request for an image, the request containing a specification for generating the image;
   receiving, from the server via the API, data representing a raster image, the raster image data being generated by the server in response to the request and based on data representing a source image in a scalable source image format;
   displaying the raster image data on the client device via a Graphical User Interface (GUI);
   receiving, from the server via the API, metadata associated with the raster image data, the metadata comprising a brand color associated with the raster image; and
   modifying a user interface configured to be displayed by the client device to render a profile page based on the brand color.
11. The method of aspect 10, wherein the metadata further comprises at least one of a brand name associated with the raster image, an owner of the brand name, or a category of a business in which the owner participates.
12. The method of aspect 10 or aspect 11, further comprising: adjusting the GUI based on the metadata.
13. The method of any of aspects 10 to 12, wherein the request is a GET request.
14. The method of any of aspects 10 to 13, wherein the specification comprises at least one of an image size, an image file type, a color scheme, or a background setting.
15. The method of any of aspects 10 to 14, wherein the scalable source image format is a vector image format.
16. A system for providing digital content over a network, the system comprising:
   one or more memory devices storing instructions; and
   one or more processors configured to execute the instructions to perform the method of any of aspects 10 to 15.
17. A computer-readable medium storing instructions which, when executed by a computer, cause the computer to perform the method of any of aspects 10 to 15.
18. A computer program comprising instructions which, when the program is executed by a computer, cause the computer to carry out the method of any of aspects 10 to 15.
19. A method for handling digital content over a network, the method comprising:
   communicating, from a first device to a second device via an Application Programming Interface (API) configured to accept requests conforming to Hypertext Transfer Protocol (HTTP), a request for an image, the request comprising a specification for generating the image;
   retrieving, in response to the request, data representing a source image, the source image data being in a scalable source image format;
   generating data representing a raster image, based on the source image data and the specification;
   delivering the raster image data from the second device to the first device via the API;
   delivering, from the first device to the second device, metadata associated with the raster image data, the metadata comprising a brand color associated with the raster image; and
   modifying a user interface configured to be displayed by the second device to render a profile page based on the brand color.
20. The method of aspect 19, further comprising:
   caching the raster image data in one or more memory devices accessible to the second device;
   delivering the cached raster image data to the first device in response to a subsequent request for the raster image data when the cached raster image data is available for the image as specified in the request;
   detecting at least one of a change to the source image data or a removal of the source image data; and
   purging the cached raster image data generated based on the source image data based on results of the detecting.
21. The method of aspect 19 or aspect 20, further comprising: displaying the raster image data on the first device via a Graphical User Interface (GUI).
22. The method of any of aspects 19 to 21, wherein the metadata further comprises at least one of a brand name associated with the raster image, an owner of the brand name, or a category of a business in which the owner participates.
23. The method of any of aspects 19 to 22, further comprising: adjusting the GUI based on the metadata.
24. A system for providing digital content over a network, the system comprising:
   one or more memory devices storing instructions; and
   one or more processors configured to execute the instructions to perform the method of any of aspects 19 to 23.

## Claims

**1.** A method for providing digital content over a network, the method comprising:
receiving, from a client device via an Application Programming Interface, API, a request for an image, the request containing a specification for the image;
retrieving, in response to the request, data representing a source image, the source image data being in a scalable source image format;
generating data representing a raster image based on the source image data and the specification;
caching the raster image data in the one or more memory devices;
delivering the raster image data to the client device via the API; and
delivering the cached raster image data to the client device in response to a subsequent request for the raster image data, when the cached raster image data is available for the image as specified in the request.

**2.** The method of claim 1, further comprising:
detecting at least one of a change to the source image data or a removal of the source image data; and
purging the cached raster image data generated based on the source image data.

**3.** The method of claim 1 or 2, further comprising:
delivering, to the client device via the API, metadata associated with the raster image data.

**4.** A method for processing digital content over a network, the method comprising:
transmitting, to a server via an Application Programming Interface, API, a request for an image, the request containing a specification for the image;
receiving, from the server via the API, data representing a raster image, the raster image data being generated by the server in response to the request and based on data representing a source image in a scalable source image format; and
displaying the raster image data on the client device via a Graphical User Interface, GUI.

**5.** The method of claim 4, further comprising:
receiving, from the server via the API, metadata associated with the raster image data.

**6.** A method for handling digital content over a network, comprising:
communicating, from a first device to a second device via an Application Programming Interface, API, a request for an image, the request comprising a specification for the image;
retrieving, in response to the request, data representing a source image, the source image data being in a scalable source image format;
generating data representing a raster image, based on the source image data and the specification; and
delivering the raster image data from the second device to the first device via the API.

**7.** The method of claim 6, further comprising:
caching the raster image data in one or more memory devices accessible to the second device;
delivering the cached raster image data to the first device in response to a subsequent request for the raster image data when the cached raster image data is available for the image as specified in the request;
detecting at least one of a change to the source image data or a removal of the source image data;
purging the cached raster image data generated based on the source image data based on results of the detecting; and
displaying the raster image data on the first device via a Graphical User Interface, GUI.

**8.** The method of claim 6 or claim 7, further comprising:
delivering, from the second device to the first device via the API, metadata associated with the raster image data.

**9.** The method of claim 5 or claim 8, further comprising:
adjusting the GUI based on the metadata.

**10.** The method of any of claims 3, 5, 8, or 9, wherein the metadata comprises at least one of a brand name associated with the raster image, a brand color associated with the raster image, an owner of the brand name, or a category of a business in which the owner participates.

**11.** The method of any of the preceding claims, wherein the API is configured to accept a request conforming to Hypertext Transfer Protocol, HTTP.

**12.** The method of any of the preceding claims, wherein the specification comprises at least one of an image size, an image file type, a color scheme, or a background setting.

**14.** The method of any of the preceding claims, wherein the scalable source image format is a vector image format.

**15.** A system for providing digital content over a network, the system comprising:
one or more memory devices storing instructions; and
one or more processors configured to execute the instructions to cause the system to perform the method according to any of the preceding claims.
